# EUROPÄISCHE PATENTANMELDUNG

(11) **EP 1 659 571 A2**
(43) Veröffentlichungstag der Anmeldung: **24.05.2006**
(21) Anmeldenummer: 05020315.7
(22) Anmeldetag: 17.09.2005
(51) Int. Cl.: G10L 15/22, G10L 15/28

(54) **Sprachdialogsystem und Verfahren zum Betreiben**

(30) Priorität: 18.11.2004 DE 102004056166
(71) Anmelder: Deutsche Telekom AG, 53113 Bonn (DE)
(72) Erfinder: Kirchherr, Ralf, 63225 Langen (DE); Burkhardt, Felix, 10587 Berlin (DE)

(57) **Zusammenfassung**

Die Erfindung betrifft ein Sprachdialogsystem mit einer Client-Server-Struktur und ein Verfahren zum Betreiben des Systems, bei dem der Dialog vorzugsweise unter Nutzung eines VoiceXML-Browsers erfolgt.

Aufgabe ist es, eine Lösung zu schaffen, welche die Berücksichtigung emotionaler Zustände der Nutzer entsprechender Dialogsysteme ermöglicht. Die Lösung soll vorzugsweise unter Nutzung bereits existierender Voice-Browser, umgesetzt werden können.

Zur Lösung der Aufgabe ist mindestens einer auf dem Applikationsserver gehaltenen, im Sprachdialog nutzbaren Anwendung ein Emotionserkenner-Modul für eine prosodische Klassifizierung der Spracheingaben des Benutzers zugeordnet. Die betreffende Anwendung umfasst eine Steuerlogik, durch welche ihre Response auf eine Spracheingabe sowohl in Abhängigkeit des mittels der semantischen Sprachanalyse gewonnenen Steuerkommandos als auch eines von dem Emotionserkenner-Modul erhaltenen, den emotionalen Zustand des Nutzers repräsentierenden Wertes gesteuert wird. Dazu werden die Spracheingaben des Nutzers während ihrer semantischen Analyse durch den Client aufgezeichnet und über den Applikationsserver als Audiodatenstrom an das Emotionserkenner-Modul übertragen.

## Beschreibung

Die Erfindung betrifft ein Sprachdialogsystem und ein Verfahren zum Betreiben des Systems. Insbesondere bezieht sich die Erfindung auf ein Sprachdialogsystem mit einer Client-Server-Struktur. Dabei betrifft die Erfindung gemäß einer speziellen Ausgestaltung eine auf der Verwendung eines VoiceXML-Browsers basierende Lösung.

Sprachdialogsysteme sind seit längerem für die Bedienung von Automaten oder im Zusammenhang mit der Nutzung von Service-Hotlines über das Telefon bekannt. Die zunehmende Verbreitung von IP-basierten Netzen und das Bestreben, deren Inhalte nahezu überall nutzbar zu machen, hat zu der Überlegung geführt, den Zugang nicht nur über den Computer oder ein Mobiltelefon (WAP), sondern auch über Festnetztelefone zu ermöglichen. Die Nutzung entsprechender Netze und ihrer Inhalte erfolgt hier sprachbasiert. Dazu sind insbesondere im Zusammenhang mit der Weiterentwicklung des für die Navigation und die Darstellung von Inhalten in lP-basierten Netzen genutzten HTML-Standards zum XML-Standard Erweiterungen entstanden und standardisiert worden, welche auch den sprachbasierten Informationsaustausch in derartigen Netzen, gegebenenfalls auch im Internet ermöglichen.
Die Grundlage für den auf dem XML-Standard basierenden Informationsaustausch via Sprache bildet VoiceXML. Es wurden entsprechende Voice-Browser (Client) entwickelt, mittels derer Inhalte IP-basierter Netze unter Nutzung von VoiceXML in einer zur Nutzung des Internet mit dem Computer vergleichbaren Art und Weise zugänglich gemacht werden können. Ein Unterschied zu herkömmlichen, zeichenbasierten Browsern besteht lediglich darin, dass der Client, also der Voice-Browser, im Allgemeinen nicht auf einem System des Users, sondern in den Zugangseinrichtungen eines Service Providers implementiert ist. Der User ruft eine entsprechende Zugangsnummer des Service Providers an und kann dann in einem Sprachdialog die Inhalte nutzen, welche ihm durch den Voice-Browser in akustischer Form ausgegeben, also quasi "vorgelesen" werden.
Zur Umsetzung der von dem Benutzer gegebenen Navigationskommandos arbeitet der Voice-Browser mit einer Sprachanalyseeinheit zusammen. Allerdings ist dieser Ansatz noch nicht ganz befriedigend. So ist es im Rahmen der bloßen semantischen Sprachanalyse nicht möglich, emotionale Befindlichkeiten der Nutzer, wie beispielsweise Unsicherheit bei der Nutzung des Systems oder Ärger beziehungsweise Wut, im Falle des Auftretens von Schwierigkeiten, festzustellen und in dem Sprachdialog beziehungsweise hinsichtlich der angebotenen Inhalte hierauf in geeigneter Weise zu reagieren.
Andererseits sind Lösungen zur Feststellung beziehungsweise Bewertung emotionaler Zustände von Personen bereits bekannt. Entsprechende Lösungen, wie sie beispielsweise durch die WO 99/31653 A1 für die Anwendung in Lügendetektoren beschrieben werden, basieren auf einer prosodischen Klassifizierung sprachlicher Äußerungen durch die Auswertung der Intonation, der Stimmhöhe beziehungsweise des Tembres der jeweiligen sprachlichen Äußerung. Nun wäre es denkbar, Voice-Browser zur Berücksichtigung emotionaler Reaktionen ihrer Nutzer um ein entsprechendes Emotionserkenner-Modul auf prosodischer Grundlage zu ergänzen. Die Abfrage zur Emotionsbewertung könnte dann, ähnlich wie bei der Abfrage der Erkenner-Konfidenz, über eine entsprechende VoiceXML-Variable erfolgen. Für diese Vorgehensweise könnten jedoch marktübliche VoiceXML-Browser nicht genutzt werden oder müssten mit beträchtlichem Aufwand entsprechend modifiziert werden.

Aufgabe der Erfindung ist es daher, eine Lösung zu schaffen, welche die Berücksichtigung emotionaler Zustände der Nutzer sprachbasierter Dialogsysteme auf der Grundlage von Client-Server-Strukturen ermöglicht. Dabei soll die Lösung so ausgebildet sein, dass sie auch unter Nutzung bereits existierender Voice-Browser, ohne Notwendigkeit ihrer Modifizierung, umgesetzt werden kann.

Die Aufgabe wird durch ein Verfahren mit den Merkmalen des Hauptanspruchs gelöst. Eine die Durchführung des Verfahrens ermöglichendes Sprachdialogsystem ist durch den ersten vorrichtungsbezogenen Anspruch charakterisiert. Vorteilhafte Aus- beziehungsweise Weiterbildungen der Erfindung sind durch die jeweiligen Unteransprüche gegeben.
Bei dem vorgeschlagenen Sprachdialogsystem, welches auf einer Client-Server-Struktur beruht, kommuniziert der Benutzer des Systems in an sich bekannter Weise mittels eines Clients sprachbasiert mit einem Applikationsserver. Über diesen Applikationsserver erhält der Benutzer Zugriff auf Anwendungen, welche im Sprachdialog nutzbar sind. Der zur Kommunikation mit dem Applikationsserver verwendete Client wird ihm dabei vorzugsweise auf den Zugangseinrichtungen eines Service Providers zur Verfügung gestellt und ist über eine entsprechende, vom Benutzer des Sprachdialogsystems anzuwählende Servicerufnummer zu starten. Eine Spracheingabe des Benutzers wird in einer Spracherkennungseinheit des Clients semantisch analysiert und, sofern dabei innerhalb eines durch eine anwendungsspezifische Grammatik definierten Sprachraums eine Entsprechung festgestellt wird, in ein digitales Steuerkommando umgesetzt. Das entsprechende Steuerkommando wird dann durch den Client über den Applikationsserver an eine von diesem bereitgestellte Anwendung übertragen. Aufgrund des Steuerkommandos werden durch die Anwendung entsprechende mit seiner Ausführung verbundene Serverprozesse ausgelöst, in deren Ergebnis schließlich durch die Anwendung eine Response an den Client zurückgeben wird. Der Client setzt diese Response in eine für den Nutzer verständliche Dialogantwort um und gibt die Dialogantwort an den Benutzer aus. Insoweit entspricht das Sprachdialogsystem bisher bekannten Lösungen dieser Art. In erfindungswesentlicher Wiese ist aber bei dem vorgeschlagenen System darüber hinaus mindestens einer auf dem Applikationsserver gehaltenen, im Sprachdialog nutzbaren Anwendung ein Emotionserkenner-Modul für eine prosodische Klassifizierung der Spracheingaben des Benutzers zugeordnet. Zudem umfasst die betreffende Anwendung eine Steuerlogik, durch welche ihre Response auf eine Spracheingabe des Benutzers sowohl in Abhängigkeit des dazu mittels der semantischen Sprachanalyse gewonnenen Steuerkommandos als auch eines von dem Emotionserkenner-Modul im Ergebnis einer prosodischen Klassifizierung erhaltenen, den emotionalen Zustand des Nutzers repräsentierenden Wertes gesteuert wird. Gemäß der Erfindung werden dazu die Spracheingaben des Nutzers während ihrer semantischen Analyse durch den Client aufgezeichnet und über den Applikationsserver als Audiodatenstrom an das Emotionserkenner-Modul übertragen.
An dieser Stelle sei bemerkt, dass sowohl Spracherkennungseinheiten auf der Basis einer semantischen Analyse als auch Systeme zur Feststellung eines emotionalen Zustands einer Person auf der Grundlage einer prosodischen Klassifizierung ihrer sprachlichen Äußerungen, wie eingangs dargelegt, grundsätzlich bekannt sind und daher als solches nicht Gegenstand der Erfindung sind. Vielmehr geht es darum, derartige Systeme in einen neuen, auf eine Client-Server-Struktur zugeschnittenen funktionalen Zusammenhang zu bringen. Hierdurch entsteht ein Sprachdialogsystem, welches seinem Benutzer eine noch komfortable Bedienung sprachgesteuerter, auf einem Applikationsserver gehaltener Anwendungen ermöglicht und welches bei der Dialogführung flexibel auf eventuelle emotionale Befindlichkeiten des Nutzers eingeht. So kann ein derartiges Sprachsystem, im Falle dessen, dass die Kombination des Ergebnisses der semantischen Analyse einer Spracheingabe und der prosodischen Klassifizierung des zugehörigen Sprachsignals zu dem Schluss führt, dass die betreffende Person bei der Bedienung der Anwendung unsicher oder überfordert ist, beispielsweise mit der Ausgabe eines Hilfeprompts reagieren.
Das Emotionserkenner-Modul des erfindungsgemäßen Sprachdialogsystems kann einer oder mehreren Anwendungen zugeordnet sein. Hiezu wird es, entsprechend einer bevorzugten Ausführungsform der Erfindung, als ein eigenständiger Thread auf dem Applikationsserver ausgeführt, welcher mit den entsprechenden Anwendungen interagiert.
Bei einem speziell zur Nutzung von Anwendungen in IP-basierten Netzen ausgelegten Sprachdialogsystem ist der Client als ein Voice-Browser ausgeführt, welcher ähnlich wie ein herkömmlicher, zeichenbasierter Browser den Aufruf und die Wiedergabe von Netzinhalten ermöglicht, wobei der die Inhalte in jedem Falle sprachgesteuert aufzurufen sind, vorzugsweise aber auch ihrer Wiedergabe in sprachlicher Form erfolgt. Eine Spracheingabe des Benutzers wird dabei von dem Voice-Browser in einen HTTP-Post-Request umgesetzt. Die jeweilige sprachgesteuerte Anwendung reagiert hierauf mit einer HTTP-Response. Im Hinblick auf die bereits angesprochene Weiterentwicklung des XML-Standards und deren Verbreitung handelt es sich bei dem Browser vorzugsweise um einen VoiceXML-Browser.
Entsprechend einer besonders vorteilhaften Weiterbildung des erfindungsgemäßen Sprachdialogsystems, ist dieses so gestaltet, dass Anwendungen, denen ein Emotionserkenner-Modul zugeordnet ist, zusätzlich über einen Timer und einen Speicher verfügen. Diese Ausbildung dient der Realisierung flüssiger Dialoge, indem im Falle dessen, dass die teilweise doch verhältnismäßig aufwendige prosodische Klassifizierung länger dauert, durch das System bzw. die jeweilige Anwendung zunächst eine Response ohne Berücksichtung des emotionalen Klassifizierungsergebnisses erfolgt. Dazu ist mittels des Timers eine maximale Berechnungszeit für die prosodische Klassifizierung einer Spracheingabe des Nutzers vorgebbar. Ein unter Überschreitung dieser maximalen Berechnungszeit ermittelter emotionaler Status des Benutzers bleibt dann für die Response im aktuellen Dialogschritt außer Betracht. Der diesen Status repräsentierende, vom Emotionserkenner-Modul zurückgegebene Wert, vorzugsweise ein Wert zwischen 0 und 1 - 0 für eine nicht bestehende emotionale Erregung, 1 für eine starke emotionale Erregung - , wird in dem genannten Speicher der Anwendung gespeichert und bei der Generierung der Response auf die nächste Spracheingabe des Benutzers berücksichtigt.
Gemäß einem Verfahren, welches die Aufgabe im Hinblick auf den sprachgesteuerten Zugriff auf Inhalte von IP-Netzen, gegebenenfalls auch auf das Internet, mittels eines erfindungsgemäß gestalteten Sprachdialogsystems löst, werden Spracheingaben des Benutzers unter Nutzung der Property 'recordutterance' und der Shadow-Variablen 'lastresult$.recording' an das Emotionserkenner-Modul übergeben. Dazu wird bei einer Spracheingabe das Property 'recordutterance' auf "true" gesetzt und die Spracheingabe vermittels der Shadow-Variablen 'lastresult$.recording' ausgelesen sowie, veranlasst durch die jeweilige Anwendung, an das Emotionserkenner-Modul übergeben.
Eine Alternative besteht darin, Spracheingaben des Benutzers durch den VoiceXML-Browser über das <record>-Tag aufzuzeichnen und das aufgezeichnete Audiosignal direkt an das zugehörige <field>-Tag zu übergeben (z.B. Attribut 'inputexpr' bei Nuance Voice Portal) sowie mittels des <submit>-Befehls über die Anwendung an das Emotionserkenner-Modul zu übertragen. Welche der vorgenannten Verfahrensweisen zum Einsatz gelangt hängt insbesondere von der auf dem Sprachdialogsystem implementierten Version des XML-Standards beziehungsweise der Art des implementierten VoiceXML-Browsers ab.
Gemäß einer Weiterbildung der letztgenannten Verfahrensalternative wird außerdem neben dem aufgezeichneten Sprachsignal eine in Abhängigkeit des Ergebnisses der semantischen Analyse gesetzte Variable an das Emotionserkenner-Modui übergeben. Über den Inhalt dieser Variable wird dem Emotionserkenner-Modul mitgeteilt, ob bei der semantischen Analyse einer jeweiligen Spracheingabe für diese eine Entsprechung innerhalb des, in der Form der anwendungsspezifischen Grammatik definierten Sprachraums erkannt wurde. Hierdurch wird es möglich, auf sprachliche Äußerungen des Benutzers auch dann zu reagieren, wenn diese kein gültiges Steuerkommando darstellen. Im Falle solcher so genannter Nomatch-Events leitet das System beziehungsweise die jeweils aktive Anwendung ihre Response ausschließlich von dem durch das Emotionserkenner-Modul für den emotionalen Zustand des Benutzers zurückgegeben Wert ab. Über die Shadow-Variable 'lastresult$.recording' kann dabei kein Audiosignal abgegriffen werden. Das Emotionserkenner-Modul kann die Information über das Vorliegen eines Nomatch-Events aber nutzen, um die Schwellen der Emotionsklassifizierung dynamisch zu adaptieren, da die Wahrscheinlichkeit emotionaler Äußerungen in der Regel höher ist, wenn diese außerhalb der anwendungsspezifischen Sprachgrammatik liegen. Das heißt, bei auftretenden Emotionen verwenden die Benutzer mit einer gewissen Wahrscheinlichkeit Äußerungen, die aus Sicht des Sprachdialogsystems unter semantischen Gesichtspunkten keine sinnvollen Spracheingaben darstellen, so dass aufgrund dieser Wahrscheinlichkeit auch niedrigere Schwellen des Emotionserkenners verwendet werden können, um eine emotionale Äußerung als solche zu klassifizieren.

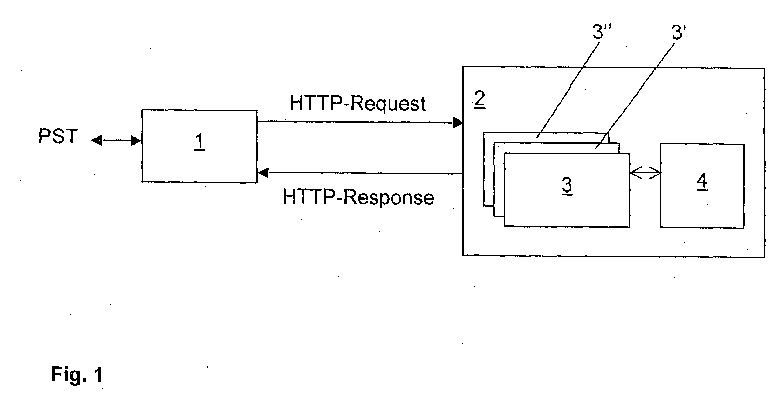

Die Erfindung soll nachfolgend anhand einer beispielhaften Ausführungsform nochmals näher erläutert werden. Hierzu ist in der Fig. 1 eine mögliche Ausbildungsform der erfindungsgemäßen Anordnung in Form eines groben Schemas dargestellt.
Danach gestaltet sich die Nutzung IP-basierter Applikationen mittels eines Sprachdialogsystems gemäß der Erfindung wie folgt. Mittels seines in der Fig. 1 nicht dargestellten Telefons wählt der Benutzer über das PSTN (Public Switched Telephone Network) eine entsprechende Zugangsnummer eines Service Providers an. Zur Führung des Dialogs beziehungsweise zur Nutzung der Inhalte wird ihm von dem Service Provider auf dessen Zugangseinrichtungen, gegebenenfaiis nach Durchführung einer Authentifikationsprozedur, ein Client 1 in Form eines VoiceXML-Browsers zur Verfügung gestellt. Mittels des VoiceXML-Browsers 1 kann der Nutzer des Sprachdialogsystems, ähnlich wie mit einem gewöhnlichen zeichenbasierten Browser, navigieren, auf die Inhalte zugreifen und diese Inhalte erfassen. Die Navigation erfolgt mit entsprechenden Sprachkommandos, welche mit Hilfe einer (nicht dargestellten) Sprachanalyseeinheit des VoiceXML-Browsers (1) in zeichenbasierte Kommandos umgesetzt werden. Die Inhalte beziehungsweise der Content werden dem Benutzer in Form von Sprache beziehungsweise entsprechenden Audiodateien über das PSTN an seinem Telefon zur Verfügung gestellt. Das heißt, der VoiceXML-Browser (1) "liest" ihm die jeweiligen Inhalte vor. Diese Inhalte liegen in Form netzbasierter Anwendungen 3, 3', 3" beziehungsweise Applikationen auf einem Applikationsserver 2 vor, auf welchen der Benutzer durch die sprachgesteuerte Navigation über den VoiceXML-Browser 1 Zugriff hat. Entsprechend der von ihm gegebenen Navigationskommandos, welche mit Hilfe der bereits erwähnten, mit dem VoiceXML-Browser 1 zusammenarbeitenden beziehungsweise in diesen integrierten Sprachanalyseeinheit übersetzt werden, steuert der Benutzer die ihn jeweils interessierenden Inhalte beziehungsweise die ihn interessierende Anwendung 3, 3', 3" an. Die Nutzung dieser Inhalte beziehungsweise das Navigieren in den die Inhalte zur Verfügung stellenden Anwendungen 3, 3', 3" wird entsprechend der Erfindung zusätzlich zur semantischen Analyse der Sprachkommandos durch eine Analyse des jeweiligen emotionalen Zustands des Benutzers unterstützt. Dem Grundgedanken der Erfindung folgend, ist ein entsprechendes Emotionserkenner-Modul 4 aber nicht in dem Client 1 integriert, sondern mit den auf dem Applikationsserver 2 liegenden Applikationen gekoppelt. Hierdurch können bereits existierende VoiceXML-Browser 1 bei der Umsetzung der Erfindung unverändert bleiben.
Zur Bewertung der Emotionen des Benutzers werden dessen sprachliche Äußerungen bei der Navigation aufgezeichnet und an das Emotionserkenner-Modul 4 übermittelt. Bei der Verwendung von VoiceXML, von welcher in dem dargestellten Beispiel ausgegangen wird, erfolgt dabei beispielsweise die Aufzeichnung der vom Benutzer gegebenen Sprachkommandos mittels eines <record>-Tags, über welches ein die sprachliche Äußerung des Nutzers enthaltendes Audiosignal direkt einem zugehörigen <field>-Tag (z.B. Attribut 'inputexpr' bei Nuance Voice Portal) übergeben werden kann. Die Übertragung zum Emotionserkenner-Modul 4 kann dann mittels des <submit>-Befehls veranlasst werden. Das Emotionserkenner-Modul 4 klassifiziert die empfangene Audiodatei hinsichtlich des emotionalen Zustands des Benutzers auf der Grundlage der bereits erwähnten prosodischen Merkmale und meldet das Ergebnis der Analyse an die jeweilige Anwendung 3, 3', 3" zurück. Die Anwendung 3, 3', 3" umfasst eine, wie bereits erwähnt, nicht dargestellte Steuerlogik zur Dialogsteuerung in Abhängigkeit der bei der semantischen Analyse ermittelten Entsprechung und des durch das Emotionserkenner-Modul 4 erkannten Emotionszustandes. Zur Fortführung des Dialogs liefert die Anwendung 3, 3', 3" eine entsprechende VoiceXML-Response an den Voice-Browser 1 zurück, welcher diese interpretiert und als Dialogantwort an den Benutzer ausgibt.

Liste der verwendeten Bezugszeichen
- 1: Client (Voice- bzw. VoiceXML-Browser)
- 2: Applikationsserver
- 3, 3', 3": Anwendung
- 4: Emotionserkenner-Modul

## Patentansprüche

1. Sprachdialogsystem mit einer Client-Server-Struktur, bei welchem der Benutzer mittels eines Clients (1) sprachbasiert mit einem Applikationsserver (2) kommuniziert, über den er Zugriff auf im Sprachdialog nutzbare Anwendungen (3, 3', 3") erhält, wobei eine Spracheingabe des Benutzers in einer Spracherkennungseinheit des Clients (1) semantisch analysiert, in ein digitales Steuerkommando umgesetzt und das Steuerkommando durch den Client (1) über den Applikationsserver (2) an eine von diesem bereitgestellte Anwendung (3, 3', 3") übertragen wird, welche hierauf eine Response an den Client (1) zurückgibt, die dieser in eine Dialogantwort umsetzt und an den Benutzer ausgibt, **dadurch gekennzeichnet, dass** mindestens einer auf dem Applikationsserver (2) gehaltenen, im Sprachdialog nutzbaren Anwendung (3, 3', 3") ein Emotionserkenner-Modul (4) für eine prosodische Klassifizierung der Spracheingaben des Benutzers zugeordnet ist und die betreffende Anwendung (3, 3', 3") eine Steuerlogik umfasst, durch welche ihre Response auf eine Spracheingabe des Benutzers sowohl in Abhängigkeit des dazu mittels der semantischen Sprachanalyse gewonnenen Steuerkommandos als auch eines von dem Emotionserkenner-Modul (4) im Ergebnis einer prosodischen Klassifizierung erhaltenen, den emotionalen Zustand des Nutzers repräsentierenden Wertes gesteuert wird, wobei die Spracheingaben des Nutzers während ihrer semantischen Analyse durch den Client (1) aufgezeichnet und über den Applikationsserver (2) als Audiodatenstrom an das Emotionserkenner-Modul (4) übertragen werden.

2. Sprachdialogsystem nach Anspruch 1, **dadurch gekennzeichnet, dass** das Emotionserkenner-Modul (4) einer oder mehreren Anwendungen auf dem Applikationsserver (2) zugeordnet und als ein eigenständiger, mit den Anwendungen (3, 3', 3") auf dem Applikationsserver (4) interagierender Thread ausgebildet ist.

3. Sprachdialogsystem nach Anspruch 1 oder 2, zur Nutzung von Anwendungen (3, 3', 3") auf einem Applikationsserver (2) in einem IP-basierten Netz, **dadurch gekennzeichnet, dass** der Client (1) als ein Voice-Browser ausgebildet ist, wobei eine Spracheingabe des Benutzers von dem Voice-Browser (1) in einen HTTP-Post-Request umgesetzt wird und die jeweilige Anwendung (3, 3', 3") hierauf mit einer HTTP-Response reagiert.

4. Sprachdiälogsystem nach Anspruch 3, **dadurch gekennzeichnet, dass** es sich bei dem Voice-Browser (1) um einen VoiceXML-Browser handelt.

5. Sprachdialogsystem nach einem der Ansprüche 1 bis 4, **dadurch gekennzeichnet, dass** Anwendungen, denen ein Emotionserkenner-Modul (4) zugeordnet ist, über einen Timer und einen Speicher verfügen, wobei mittels des Timers eine maximale Berechnungszeit für die prosodische Klassifizierung einer Spracheingabe des Nutzers vorgebbar ist und ein unter Überschreitung dieser maximalen Berechnungszeit ermittelter emotionaler Status des Benutzers für die Response im aktuellen Dialogschritt außer Betracht bleibt, aber in dem Speicher zur Berücksichtigung bei der Generierung der Response auf die nächste Spracheingabe des Benutzers gespeichert wird.

6. Verfahren zum Betreiben des Sprachdialogsystems nach Anspruch 4, **dadurch gekennzeichnet, dass** Inhalte, welche von den mittels des VoiceXML-Browsers (1) nutzbaren Anwendungen (3, 3', 3") zur Eröffnung eines Sprachdialogs oder als Dialogantwort auf eine Spracheingabe des Benutzers über den VoiceXML-Browser (1) ausgegeben werden, so ausgebildet werden, dass zur Aufzeichnung und Übermittlung einer Spracheingabe des Benutzers an das Emotionserkenner-Modul (4) das Property 'recordutterance' auf "true" gesetzt und die Spracheingabe vermittels der Shadow-Variablen 'lastresult$.recording' ausgelesen sowie über die Anwendung (3, 3', 3") an das Emotionserkenner-Modul (4) übergeben wird.

7. Verfahren zum Betreiben des Sprachdialogsystems nach Anspruch 4, **dadurch gekennzeichnet, dass** Inhalte, welche von den mittels des VoiceXML-Browsers (1) nutzbaren Anwendungen (3, 3', 3") zur Eröffnung eines Sprachdialogs oder als Dialogantwort auf eine Spracheingabe des Benutzers über den VoiceXML-Browser (1) ausgegeben werden, so ausgebildet werden, dass Spracheingaben des Benutzers durch den VoiceXML-Browser (1) über das <record>-Tag aufgezeichnet und das aufgezeichnete Audiosignal direkt an das zugehörige <field>-Tag übergeben sowie mittels des <submit>-Befehls über die Anwendung (3, 3', 3") an das Emotionserkenner-Modul (4) übertragen werden

8. Verfahren nach Anspruch 8, **dadurch gekennzeichnet, dass** neben dem aufgezeichneten Sprachsignal eine in Abhängigkeit des Ergebnisses der semantischen Analyse gesetzte Variable an das Emotionserkenner-Modul (4) übergeben wird, durch deren Inhalt dem Emotionserkenner-Modul (4) mitgeteilt wird, ob bei der semantischen Analyse einer jeweiligen Spracheingabe für diese eine Entsprechung innerhalb eines, in der Form einer anwendungsspezifischen Grammatik definierten Sprachraums erkannt wurde und dass durch das Emotionserkenner-Modul (4) für eine außerhalb dieses Sprachraums liegende Spracheingabe bei der prosodischen Klassifizierung eine niedrigere Schwelle verwendet wird.
